# EUROPÄISCHE PATENTANMELDUNG

(11) **EP 1 256 707 A2**
(43) Veröffentlichungstag der Anmeldung: **13.11.2002**
(21) Anmeldenummer: 02010425.3
(22) Anmeldetag: 08.05.2002
(51) Int. Cl.: F02M 37/22

(54) **Kraftstofffilter mit wasserabscheidenden Mitteln**

(30) Priorität: 12.05.2001 DE 10123190
(71) Anmelder: MAHLE Filtersysteme GmbH, 70376 Stuttgart (DE)
(72) Erfinder: Dittmann, Jörg, 70599 Stuttgart (DE); Gänswein, Matthias, 73732 Esslingen (DE); Lang, Hans-Peter, 70734 Fellbach (DE); Metz, Frank, 71397 Leutenbach (DE); Schick, Albert, 74336 Brackenheim (DE)
(74) Vertreter: Patentanwalts-Partnerschaft, Rotermund + Pfusch + Bernard

(57) **Zusammenfassung**

Ein Kraftstofffilter, für insbesondere Dieselkraftstoff eines Verbrennungsmotors, mit wasserabscheidenden Mitteln, besitzt in folgender Ausführung eine besonders gute Wasserabscheidefähigkeit
- das Filter ist mindestens zweistufig mit einer stromab letzten Filterstufe aus hydrophobem und einer stromauf direkt oder mit geringem Abstand davor liegenden Stufe aus hydrophilem jeweils durchlässigem Filtermaterial ausgebildet,
- der die vorletzte Filterstufe verlassende, Wasseranteile enthaltende Kraftstoff trifft umlenkungsfrei auf das Material der letzten Filterstufe auf,
- für an der letzten Filterstufe abgeschiedenes Wasser ist zwischen den beiden Filterstufen ein Abflußbereich für einen schwerkraftbewirkten Wasserabfluß vorgesehen.

## Beschreibung

Die Erfindung betrifft ein Kraftstofffilter, insbesondere für Dieselkraftstoff eines Verbrennungsmotors, mit wasserabscheidenden Mitteln.

Bei einem solchen aus EP 0 356 832 B1 bekannten Filter bestehen die wasserabscheidenden Mittel aus einer stromab des Filters nachgeschalteten strömungsumlenkenden Wand. Durch eine Strömungslenkung an dieser Wand kann aus dem Filtermaterial tröpfchenförmig vorliegendes, aus dem Kraftstoff abgetrenntes Wasser in einen lotrecht unten liegenden Wassersammelraum überführt werden. Bei für eine Wasserabscheidung ungünstigen Zusammensetzungen des Kraftstoffes und großen, das Filter passierenden Kraftstoffvolumenströmen, erfolgt bei dem vorgenannten Filter keine ausreichende Wasserabscheidung.

Die Erfindung beschäftigt sich bei dem gattungsgemäßen Kraftstofffilter mit dem Problem, auch bei kraftstoff- und strömungsbedingt schlechten Wasserabscheidebedingungen einen möglichst hohen Wasserabscheidegrad zu erzielen.

Grundsätzlich gelöst wird dieses Problem durch ein gattungsgemäßes Filter mit den kennzeichnenden Merkmalen des Patentanspruchs 1.

Zweckmäßige und vorteilhafte Ausgestaltungen der Erfindung sind Gegenstand der Unteransprüche.

Die Erfindung beruht auf dem allgemeinen Gedanken, in zumindest einer vorletzten Filterstufe, die bei einem insgesamt lediglich zweistufigen Filter die erste Stufe sein kann, in dem Kraftstoff feinverteiltes Wasser durch hydrophiles Filtermaterial zu größeren Wasserteilchenelementen koaleszieren zu lassen und diese als kleine Wassertröpfen aus der ersten Filterstufe austretenden Wasserteilchen sodann beim Auftreffen auf die letzte, mit hydrophobem Material ausgestattete Filterstufe bereits an dem stromauf liegenden Auftreffbereich dieser letzten Stufe durch einen Abflußbereich zwischen der letzten und vorletzten Stufe schwerkraftmäßig in einen Wassersammelraum abfließen zu lassen.

In der hydrophilen Filtermaterialschicht werden Wasseranteile aus dem Kraftstoff in dem Filtermaterial, das beispielsweise speziell behandeltes Papier sein kann, durch Adhäsion zu größeren Wasserteilen transformiert. Dadurch wird der Wasseranteil innerhalb des Kraftstoffes in Form vergrößerter Wasserteilchen, insbesondere kleiner Wassertröpfen, aus der ersten Filterstufe ausgetragen. In der letzten Filterstufe aus hydrophobem Material können diese Wassertröpfen sodann anströmseitig für eine etwaige weitere Vergrößerung aufgefangen und schwerkraftmäßig durch einen Abfluß zwischen der vorletzten und letzten Filterstufe abgeführt werden. Da die Wasserabscheidung an der hydrophoben letzten Filterstufe oberflächlich anströmseitig erfolgt, kann diese letzte Filterstufe als eine äußerst dünne poröse Filterschicht ausgebildet sein. Diese Filterschicht kann aus einem dünnen Gewebe, Papier, Vlies oder einem gleichartigen Material bestehen. Dabei kann für den Aufbau dieser Schicht insbesondere ein Meltblown-Material eingesetzt werden. Oberflächlich muß das Filtermaterial der letzten Filterstufe hydrophob wirken, wozu Materialien wie Silikon, PTFE (Teflon), Wachs, Polypropylen, fluorisierte Acrylate, fluorisierte Resole oder andere Materialien dieser Art eingesetzt werden können. Die letzte, hydrophobe Filterstufe dient ausschließlich zur Wasserabscheidung, nicht dagegen zur zusätzlichen Reinigung des Kraftstoffes von Schmutzteilchen.

Ein vorteilhaftes, zweckmäßiges Ausführungsbeispiel ist in der Zeichnung dargestellt.

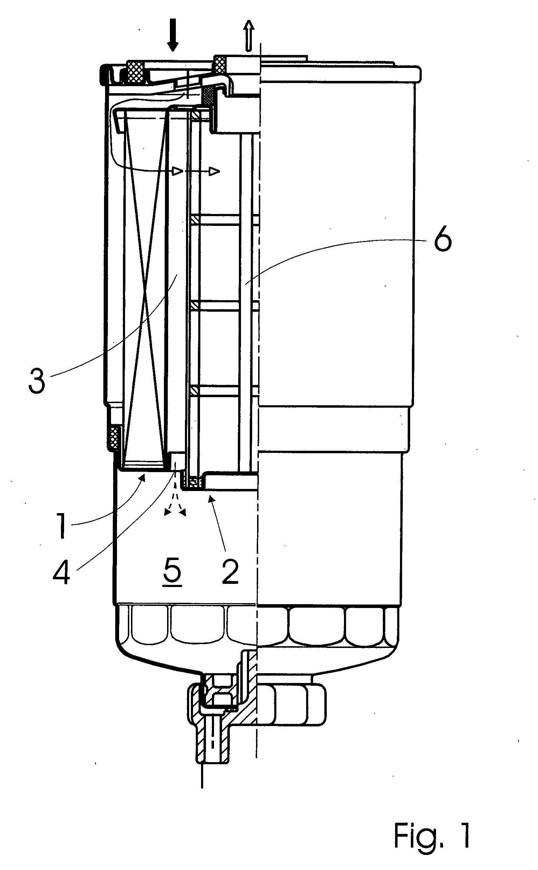

In dieser zeigt die einzige
- Fig. 1: ein Kraftstofffilter mit einer Hälfte im Schnitt und der anderen Hälfte in Ansicht.

In einem Kraftstofffilter befindet sich ein radial von außen nach innen durchströmbares Ringfilterelement mit einer ersten Filterstufe 1 und einer mit geringem Abstand stromab gelegenen zweiten Filterstufe 2. Zwischen der ersten und zweiten Filterstufe 1, 2 befindet sich ein Freiraum 3 mit einem Abflußbereich 4 zu einem von der Rein- und Rohseite des Filterelementes abgetrennten Wassersammelraum 5.

Die erste Filterstufe 1 besteht aus hydrophilem Filtermaterial, während die zweite Filterstufe aus zumindest oberflächlich hydrophobem Filtermaterial aufgebaut ist. Das Material der zweiten Filterstufe 2 besteht aus einer dünnen Folie aus beispielsweise einem Teflongewebe. Das Material der dünnen Schicht kann insbesondere aus Meltblown-Material bestehen. Die dünne Filterschicht der zweiten Filterstufe 2 kann durch eine Zarge 6 gestützt sein. Bei einer aus Kunststoff bestehenden Filterschicht der zweiten Filterstufe 2 kann die Zarge 6 einstückig mit dem Filtermaterial verbunden sein in der Form eines an sich bekannten Filterkorbes.

Die Materialien der ersten und zweiten Filterstufe 1, 2 können praktisch direkt aufeinander liegen, sofern lediglich ein ausreichender Abflußraum zu dem Abflußbereich 4 hin gegeben ist. Beide Filterstufen 1 und 2 können damit beispielsweise durch ein zweilagiges Filtermaterial, das sogar zick-zack-förmig zu einem Ringfilter geformt sein kann, gebildet werden.

Die Dicke der Filterschicht der zweiten Filterstufe 2 kann minimal etwa 90 µm betragen. Die Feinheit dieser Filterschicht beträgt etwa 4 - 25 µm, d.h. es werden dort Partikel mit lediglich einer Größe oberhalb von 4 - 25 µm bezogen auf deren kleinsten Durchmesser zurückgehalten.

## Patentansprüche

1. Kraftstofffilter, für insbesondere Dieselkraftstoff eines Verbrennungsmotors, mit wasserabscheidenden Mitteln,
**gekennzeichnet durch die Merkmale,**
- das Filter ist mindestens zweistufig mit einer stromab letzten Filterstufe (2) aus hydrophobem und einer stromauf direkt oder mit geringem Abstand davor liegenden Stufe aus hydrophilem, jeweils durchlässigem Filtermaterial ausgebildet,
- der die vorletzte Filterstufe (1) verlassende, Wasseranteile enthaltende Kraftstoff trifft umlenkungsfrei auf das Material der letzten Filterstufe (2) auf,
- für an der letzten Filterstufe (2) abgeschiedenes Wasser ist zwischen den beiden Filterstufen (1, 2) ein Abflußbereich (4) für einen schwerkraftbewirkten Wasserabfluß vorgesehen.

2. Kraftstofffilter nach Anspruch 1,
**dadurch gekennzeichnet,**
**daß** die hydrophobe Filterstufe (2) in der Form einer dünnen, membranartigen Schicht vorliegt.

3. Kraftstofffilter nach Anspruch 1 oder 2,
**dadurch gekennzeichnet,**
**daß** das Filtermaterial der hydrophoben Filterstufe (2) ein Gewebe, Gestrick, Vlies, Papier oder dergleichen ist.

4. Kraftstofffilter nach einem der vorhergehenden Ansprüche,
**dadurch gekennzeichnet,**
**daß** das Material der hydrophoben Filterstufe (2) zumindest oberflächlich aus PTFE (Teflon), Silikon, Wachs, Polypropylen, fluorisiertem Acrylat oder fluorisierten Resolen besteht.
